# EUROPEAN PATENT SPECIFICATION

(11) **EP 4 605 097 B1**
(45) Date of publication and mention of the grant of the patent: **29.04.2026**
(21) Application number: 23801876.6
(22) Date of filing: 13.10.2023
(51) Int. Cl.: A63B 60/54, A63B 51/00, A63B 60/42, A63B 60/52, A63B 102/02

(54) **VIBRATION DAMPING DEVICE FOR A SPORTS RACKET WITH FRAME AND STRING PLATE**
SCHWINGUNGSDÄMPFUNGSVORRICHTUNG FÜR EINEN SPORTSCHLÄGER MIT RAHMEN UND SAITENPLATTE
DISPOSITIF D'AMORTISSEMENT DES VIBRATIONS POUR RAQUETTE DE SPORT AVEC CADRE ET TAMIS

(30) Priority: 17.10.2022 IT 202200021291
(43) Date of publication of application: 27.08.2025
(73) Proprietor: Athleticae S.r.l., 10121 Torino TO (IT)
(72) Inventor: BECCUTI, Tommaso, 10128 Torino TO (IT)
(74) Representative: Rondano, Davide
(86) International application number: PCT/IB2023/060344
(87) International publication number: WO 2024/084355

(56) References cited:
- EP-A1- 0 208 639
- EP-A1- 0 291 434

## Description

### Technical field of the invention

The present invention relates generally to the field of sports rackets of the type comprising a frame provided with a handle and a string plate carried by the frame.

More specifically, the present invention relates to a vibration damping device, or antivibration device, for a racket of the type indicated above, that is to say, a device arranged to be attached to the strings of the racket to dampen the vibrations generated as a result of the impact of the game ball against the string plate of the racket.

In the following description, reference will be made for convenience to a tennis racket as an example of a sports racket for which the vibration damping device of the present invention is intended. However, the present invention is not intended to be limited to the field of tennis rackets, but may also be applied to other types of sports rackets, insofar as they comprise a frame and a string plate carried by the frame.

### State of the art

When a tennis racket hits the ball, vibrations are generated in the racket due to the elastic response of the frame and string plate of the racket. The vibrations caused by the impact with the ball generally have a multi-peak profile, resulting from the combination of the elastic response (bending) of the racket frame with the elastic response of the string plate.

Lower frequency vibrations (for example, in the range of 120 Hz to 200 Hz) are the result of bending of the racket frame and do not produce any audible sound, although they are transmitted to the hand and arm of the tennis player in the form of mechanical stress. Higher frequency vibrations (for example, in the range of 500 Hz to 700 Hz) are the result of the elastic response of the string plate and are perceived as a high-pitched sound, like a 'ping'. According to the latest International Tennis Federation (ITF) report, as well as other sources, a number of tennis players between 67% and 75% of the 87 millions of tennis players in the world use a vibration damping device mounted on their racket to mitigate the effects of racket vibrations.

A variety of solutions have therefore been envisaged to reduce vibrations of both the frame and the string plate of a tennis racket, including vibration damping devices, or antivibration devices, which are intended to be applied to the frame or string plate of the racket. The most common vibration damping devices are those intended to be applied onto the string plate, commonly known as *'string dampeners',* and more specifically those in the shape of a button, commonly referred to as *'button dampeners'.*

A typical example of a button dampener is illustrated in US4776590 and US4609194 and is basically formed by a cylindrical block of viscoelastic material that is to be inserted between two adjacent parallel strings of the string plate of the racket, typically in the lower part of the string plate, i.e. in the part of the string plate close to the racket handle. When mounted on the string plate, the dampener generally takes on a spherical shape. US4609194 also discloses a dampener comprising a central portion, which is intended to be inserted between two pairs of adjacent parallel strings of the string plate, and a pair of outer portions, which protrude from opposite sides of the central portion and which, in the mounted condition of the dampener, are in contact with the string plate.

A damping device according to the preamble of the attached independent claim 1 is known from EP0291434. According to this known solution, the outer portions of the damping device are made in one piece with the central portion and each include a pair of discs, namely an inner disc of a larger diameter and an outer disc of a smaller diameter.

An alternative version of a string dampener is disclosed in US4732383. This type of dampener is commonly known as '*worm dampener'* and consists of an elastic bar or strap designed to absorb vibrations. The bar or strap is made of layers of material with different elastic characteristics, and, in particular, the inner layers have a higher density than the outer ones. The ends of the bar or strap are attached to the string plate of the racket by appropriate means, such as hooks or loops, or by means of a plurality of outer ribs spaced apart from each other and extending transversely, as described in EP0497561.

It is well known that each racket has its own vibration profile, which depends both on the overall stiffness of the frame and on the type and tensioning of the string plate. The number of possible vibration modes therefore falls within a very broad spectrum. Some of the current examples of vibration damping devices are theoretically adaptable to different levels of vibration absorption, however, their production process does not allow to produce customised devices, i.e., devices configured according to the specific needs of each individual player, at reasonable costs. This is confirmed by the fact that the devices currently on the market are devices produced in a standardised manner.

This represents an evident limitation of the known solutions of vibration damping devices, since several studies (for example, "Dynamics of a String-Bed Dampener on Tennis Rackets", Mohr et al., Head Sport GmbH) have shown, both theoretically and experimentally, that the mass of each damping device should be calibrated, in order to provide optimised damping conditions, according to the specific racket configuration, i.e., to the specific frame and string plate combination. The same studies also show that the damping device affects the vibration frequencies to an extent that goes beyond, as is sometimes mistakenly believed, a simple noise reduction or a merely aesthetic addition to the racket. In fact, in-depth analysis of the vibration characteristics of the racket shows that the frequency spectrum is indeed significantly altered by the damping device. For example, the research conducted by Mohr et al. has accurately determined that by varying the mass of the damping device, the vibration mode of the racket changes substantially. Therefore, the effect of the mass of the damping device on the amplitude and frequency of the vibration modes of the racket is of paramount importance and cannot be less than certain values: according to Mohr et al.'s research, for example, the mass of the damping device cannot be less than 2.5 grams. This constraint is actually dictated by the very principle of operation of this type of damping device: the main function of the device is, in fact, to dampen vibrations by absorption, transferring kinetic energy to the molecular structures that make up the material of the device and ultimately generating heat (as described, for example, in the aforementioned document US4609194).

### Summary of the invention

It is therefore an object of the present invention to provide an improved vibration damping device with respect to the prior art discussed above, in particular a vibration damping device whose vibration damping capacity is not solely, or predominantly, dictated by the mass of the device.

A further object of the present invention is to provide a vibration damping device that can be 'customised', i.e., adapted to the specific vibration profile of each individual racket, in a cost-effective manner.

These and other objects are fully achieved according to the present invention by a vibration damping device as defined in the attached independent claim 1.

Further advantageous aspects of the invention are defined in the dependent claims, the subject-matter of which is to be understood as an integral part of the present description. In summary, the invention is based on the idea of providing a vibration damping device of the type comprising a central portion, arranged to be inserted between a pair of parallel strings of the string plate of the racket so as to be in contact with at least said pair of parallel strings, and a pair of outer portions, which are made as three-dimensional structures and protrude from opposite sides of the central portion, in such a way that in the mounted condition of the device on the string plate the outer portions are arranged on opposite sides of the string plate, wherein the outer portions are made as lattice structures each formed by a plurality of elementary cells arranged in the three spatial directions, said elementary cells being configured in such a manner that at least one of them has at least one degree of freedom with respect to at least another elementary cell in one of the three spatial directions to dissipate in operation, due to the elastic response of said elementary cells, at least part of the kinetic energy produced by the vibrations of the string plate, and of the racket as a whole.

By virtue of such a configuration, a vibration damping device according to the present invention has a significantly lower mass than that (which, as mentioned above, is generally about 2.5 grams) of a classical button dampener, while still being able to effectively dissipate the vibrations produced as a result of the impact of the string plate of the racket with the game ball, thanks to the elastic response of the lattice structures forming the outer portions of the device. Furthermore, by suitably varying the configuration of the lattice structures (in terms of geometry, dimensions and/or spatial arrangement of the elementary cells composing said structures) forming the outer portions of the device, it is possible to adapt each time the response of the vibration damping device to the specific vibration profile of the racket in question.

### Brief description of the drawings

Further features and advantages of the present invention will become apparent from the following detailed description, which is given purely by way of non-limiting example with reference to the accompanying drawings, where:
- Figure 1 is a perspective view showing part of a tennis racket and, mounted on the string plate of that racket, a vibration damping device according to an embodiment of the present invention;
- Figure 2 is a plan view of the vibration damping device in Figure 1, in the mounted condition on the racket;
- Figure 3 is a view similar to that of Figure 2, but with the vibration damping device shown without one of its two outer portions;
- Figure 4 is a side view of the vibration damping device of Figure 1;
- Figure 5 is a side view of the vibration damping device of Figure 1, in the mounted condition on the string plate of a tennis racket;
- Figure 6 is a perspective view of an assembly comprising three vibration damping devices of the type shown in Figure 1, connected in series with each other;
- Figure 7 is a side view of a vibration damping device according to a further embodiment of the present invention, which differs from that of Figures 1 to 5 in that the central portion of the device has no side wall;
- Figure 8 is a plan view of the vibration damping device of Figure 7, in which the device is shown without one of its two outer portions;
- Figure 9 shows in perspective view further embodiments of a vibration damping device according to the present invention, in which the outer portions of the device have a generally hemispherical shape;
- Figure 10 shows in perspective view a series of embodiments of a vibration damping device according to the present invention, in which the outer portions of the device have a generally cylindrical or button-like shape; and
- Figure 11 shows, for each of the vibration damping devices of Figure 10, a plan view of one of the two outer portions of the device.

### Detailed description

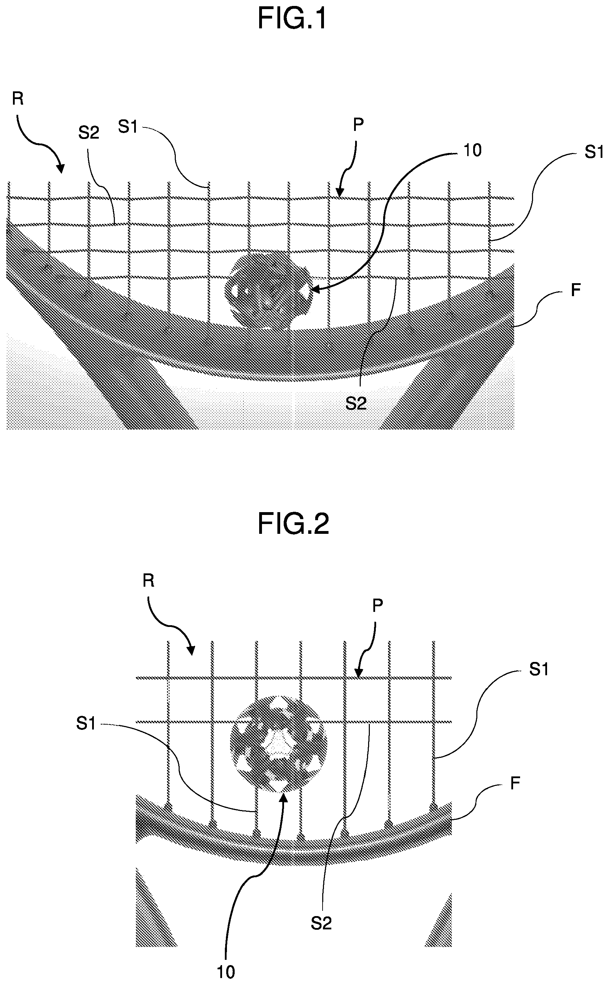

Referring first to Figures 1 to 3, a sports racket, in particular a tennis racket, is generally indicated R, which racket is only partially shown and comprises, in a per-se-known manner, a frame F provided with a handle (not shown) and a string plate P with a plurality of strings S1 (hereinafter referred to as longitudinal strings) oriented parallel to each other and a plurality of strings S2 (hereinafter referred to as transverse strings) oriented parallel to each other and perpendicular to the strings S1.

A vibration damping device (hereafter referred to simply as damping device, for the sake of convenience) is generally indicated 10 and is mounted on the string plate P of the racket R, in particular between the two central longitudinal strings S1 and below the lowest transverse string S2.

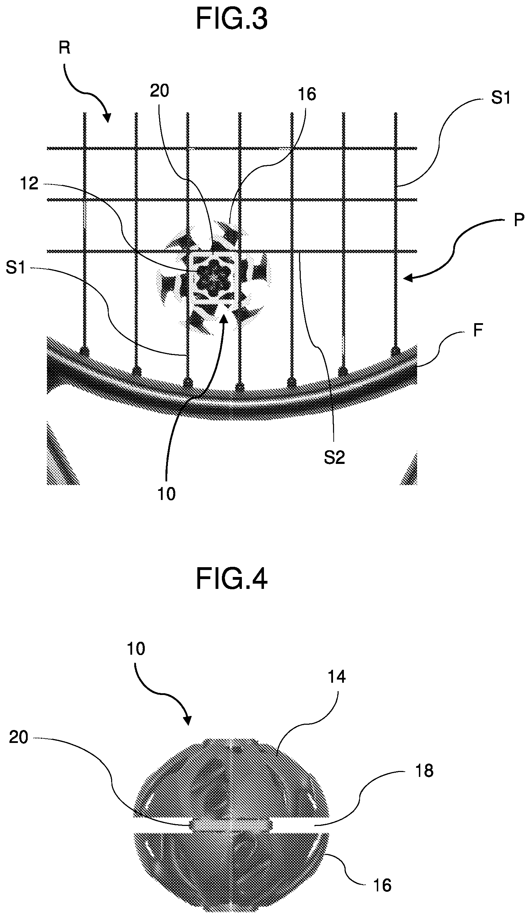

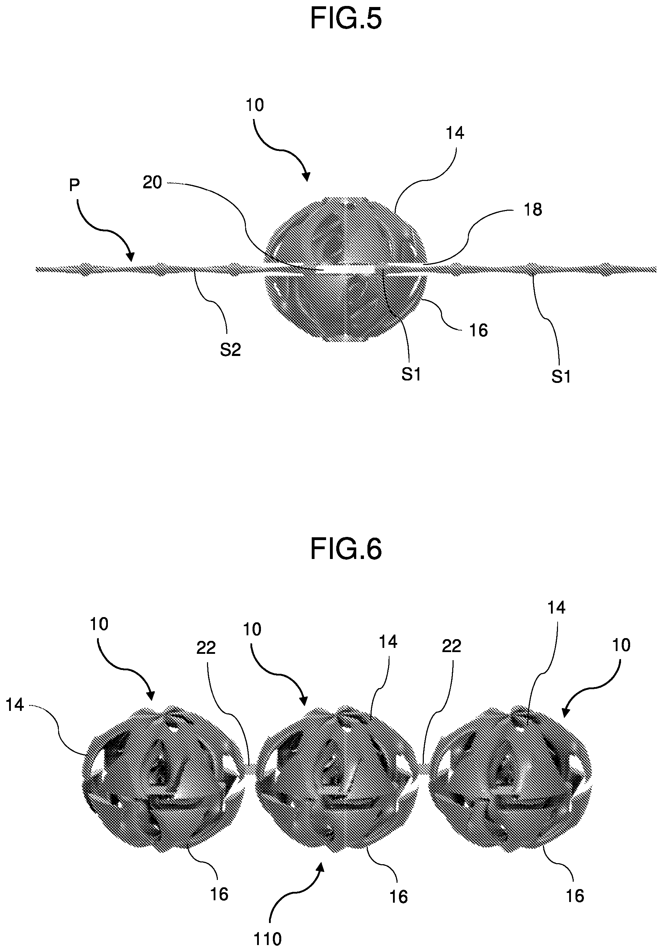

The damping device 10 is made in a single piece basically comprising a central portion 12 and a pair of outer portions 14 and 16 protruding from opposite sides of the central portion 12, in such a way that in the mounted condition of the damping device on the string plate P the outer portions 14 and 16 are arranged on opposite sides of the string plate P. The central portion 12 is configured so as to be insertable between a pair of parallel strings of the string plate P, for example - as illustrated in Figures 1 to 3 - between the central longitudinal strings S1, so as to be in contact with this pair of strings, as well as possibly - as illustrated in Figures 1 to 3 - with a transverse string S2, in particular with the lowest transverse string S2 (i.e., the transverse string S2 closest to the handle of the racket R). The outer portions 14 and 16 have, in plan view (as can be seen in Figures 2 and 3), a greater surface area than the central portion 12, so as to "cover" an area of the string plate P around the central portion 12 and create a pair of slots 18 (Figures 4 and 5) into which the above-mentioned two parallel longitudinal strings S1 of the string plate P can be inserted, so as to ensure a stable mounting of the damping device 10 on the string plate P. Furthermore, the outer portions 14 and 16 preferably have the same mass. According to the invention, the central portion 12 and the outer portions 14 and 16 are formed by three-dimensional lattice structures comprising a plurality of elementary cells arranged, in a repeated manner, in the three spatial directions and interconnected to each other.

The arrangement of the elementary cells in the space, referred to as 'mapping', can take on different configurations, for example, it can adapt to primitive solids such as the cube, parallelepiped, cylinder or sphere, but also conform to irregular solids.

The properties (mechanical, thermal, acoustic, etc.) of these structures are therefore determined by design parameters such as the geometry of the elementary cell, the thickness of the arms, or the arrangement of the elementary cells in the space, just to mention some of them. As for the type of lattice, it may be periodic, non-periodic or stochastic; moreover, it may consist of arms and nodes, regular surfaces or triple periodic minimal surfaces (also called TPMS). In the case of periodic lattice structures (such as the TPMS), the type of elementary cell determines most of the properties of the structure, including the mechanical properties. In particular, there has recently been a growing interest in the so-called '*architected materials*' or '*meta-materials*' (see for example the article 'Mechanical properties of 3D printed polymeric cellular materials with triply periodic minimal surface architectures' in Materials & Design, vol. 122, 15/05/2017, p. 255-267, or the article "Effect of unit cell topology on the tensile loading responses of additively manufactured CoCrMo triply periodic minimal surface sheet lattices" in Materials & Design, vol. 206, 08/2021, 109778). In summary, these are engineered lattice structures that achieve a targeted and controlled physical response, such as the thermal, electromagnetic, acoustic or mechanical characteristics of a component. With this approach, it is possible to modify the behaviour of a component by altering its geometry at the mesoscale level rather than by varying the material (i.e., by varying the microstructure).

Lattice structures obtained through additive manufacturing (or 3D printing) technologies are a characteristic example of a meta-material. By controlling the lattice design parameters, such as the thickness of the arms or the size and geometry of the elementary cell, it is possible to create structures with predefined mechanical characteristics. Furthermore, by varying the parameters within the same lattice, it is possible to obtain zones with differentiated mechanical responses, depending on the change in said parameters. Advantageously, thanks to additive manufacturing, these structures are made from the same base material and in a single piece, and can reach levels of geometric complexity that would otherwise not be reproducible with traditional manufacturing technologies, in particular the so-called subtractive technologies in which the component to be manufactured is obtained by removing material from a semifinished product. Indeed, while it is certainly possible to produce simple lattices using traditional manufacturing technologies such as CNC machining, welding or casting, additive manufacturing allows highly complex structures to be obtained in a single piece in a more cost-effective manner.

The lattice structures forming the central portion 12 and the outer portions 14 and 16 of the damping device 10 are suitably configured so as to optimise the response of the damping device itself based on the vibration profile of the racket R. Advantageously, knowing the specific vibration profile of the racket R, which - as explained above - depends on the specific characteristics of the frame (material, geometric conformation, mass, etc.) and the specific characteristics of the string plate (material, tensioning, etc.), it is possible to produce a damping device 10 having three-dimensional lattice structures optimised for that specific racket.

The three-dimensional lattice structures of the damping device 10 are further configured in such a way that their elementary cells are able to move with respect to each other in at least one of the three spatial directions to dissipate in operation, due to their elastic response, at least part of the kinetic energy produced by the vibration of the string plate P, and of the racket R as a whole. More generally, the three-dimensional lattice structures of the damping device 10 are configured in such a way that at least one elementary cell is able to move with respect to at least another elementary cell in at least one of the three spatial directions. The physical principle on which the damping device of the present invention is based, at least in part, is thus different from that of the damping devices according to the prior art, which - as mentioned above - must have a minimum mass in order to be able to produce measurable vibration reduction effects. Indeed, due to the partial mobility of the elementary cells with respect to each other, the damping device is able to dissipate vibrations through the elastic response of its three-dimensional lattice structures and not, as is the case with the known damping devices, by absorbing kinetic energy and generating heat.

Accordingly, while in the known damping devices the reduction of the mass of the damping device represents a disadvantage, in the damping device according to the present invention the fact of having, for the same volume, a lower mass than that of a traditional damping device, thanks to the fact that the three-dimensional lattice structures of the damping device define a series of voids within the volume of the damping device itself, represents a double advantage: reducing the mass of the damping device, in fact, means, on the one hand, reducing the mass of the entire racket, and thus - as is well known - delaying player fatigue and improving performance, and on the other hand, minimising the displacement of the centre of mass of the racket produced by the presence of the damping device.

Additionally, by using three-dimensional lattice structures the need to use different materials with different elastic responses is avoided, although not excluded. According, in fact, to the concept of 'meta-material' introduced before, by modulating the geometric shape, size and density of the three-dimensional lattice structures and of the elementary cells forming the same, it is possible to precisely control the response of the structure to certain mechanical stresses, or vibration frequencies, achieving the same result as using different materials, but with less complexity in the production process of the damping device.

A further advantage of using three-dimensional lattice structures lies in their improved aerodynamic response. In fact, it is well known that three-dimensional lattice structures have less aerodynamic drag than solid structures, such as those of traditional damping devices, and can advantageously be designed precisely with the aim of minimising this drag. A lower aerodynamic drag of the damping device evidently also results in a lower aerodynamic drag of the entire racket, and thus in an improved behaviour of the racket. The three-dimensional lattice structures of the damping device 10 are preferably made as TPMS structures. Thanks to the design freedom provided by additive manufacturing processes, it is in fact possible to produce the damping device in a theoretically infinite number of variants with negligible additional 'customisation' costs: it is thus possible to produce, at competitive costs, damping devices suitably configured based on the specific racket, also considering the type of strings used and their tensioning, and possibly also based on the individual characteristics of the specific player.

As mentioned above, the three-dimensional lattice structures that characterise the damping device 10 of the present invention are formed by a plurality of elementary cells that are repeated and arranged, in an ordered manner or not, in the three spatial directions. In particular, TPMS structures are derived from the so-called implicit geometries: for example, the gyroid is one of the implicit geometric classes of TPMS structures - resulting from given equations - which are based on elementary cells arranged in the three spatial dimensions. Since an implicit geometry can be defined as a field (in the physical sense of the term), it can be modified by, or combined with, other fields. This peculiarity allows an efficient combination of different geometries, thus creating very complex geometric structures. Advantageously, it is also possible to modify the field of such a three-dimensional lattice structure (i.e., its geometry or topology) using another property, such as the vibration field generated by a finite element simulation (FEA). The approach just described, which is relatively recent also due to the availability of software capable of practically implementing it, is defined by the expression '*field-driven design*' and is, in a nutshell, the engineering concept underlying the design of the present damping device. By exploiting the '*field-driven design*' it is therefore possible to generate variable structures, i.e., structures that change within the same volume (in this case the damping device) in the three spatial dimensions, thus assuming different values of density, number of elementary cells and shape of the elementary cells themselves depending on where they are located with respect to a given reference point (for example, the centre of mass of the damping device). By a careful engineering of the parameters of these structures, it is possible to achieve differentiated mechanical responses in a single damping device. This ultimately makes it possible to design a damping device capable of responding selectively to different vibration frequencies, and thus capable of effectively damping vibrations with different frequencies and amplitudes, thereby specifically interfering with the multi-peak vibration profile of the racket illustrated in the introductory part of the present description, acting on all its main components. Referring again to Figures 1 to 3, as well as to Figures 4 and 5, the outer portions 14 and 16 of the damping device 10 preferably have a symmetrical configuration with respect to a middle plane of the damping device oriented, in the mounted condition on the string plate P, parallel to the string plate itself. In particular, according to the embodiment illustrated in these figures the outer portions 14 and 16 of the damping device 10 have a generally hemispherical shape, with a radius comprised, for example, between 5 mm and 20 mm. Furthermore, according to the embodiment illustrated in Figures 1 to 5, the central portion 12 of the damping device 10 comprises a perimeter wall 20 surrounding the first two, innermost, elementary cells of the lattice structure forming the damping device 10. The perimeter wall 20 has a thickness comprised, for example, between 0.5 mm and 2 mm. Moreover, the perimeter wall 20 may have in plan view a square profile, as in the embodiment of Figures 1 to 5, but alternatively may have in plan view a profile of any other shape, for example rectangular, circular, elliptical, etc. In general, the perimeter wall 20 should have a geometry (i.e., shape and size) such that in the mounted condition of the damping device 10 on the string plate P the perimeter wall 20 is in contact with the strings of the racket.

The percentage of volume occupied by the lattice structure, compared to the overall volume of the damping device 10, is preferably between 15% and 90%. Furthermore, the three-dimensional lattice structure may consist of a fixed or variable number of elementary cells for each of the three spatial directions. Finally, the elementary cells of the three-dimensional lattice structure may be arranged, relative to a fixed point of origin, according to a Cartesian mapping - recalling the definition introduced previously - (thus defining the dimensions of the elementary cells in the x, y, z coordinates, expressed in linear units, for example millimetres), a cylindrical mapping (defining the size of the elementary cells in the coordinates r, θ, z, where the θ coordinate is expressed in angular units, for example radians), or a spherical mapping (defining the size of the elementary cells in the coordinates r, θ, φ, where the coordinates θ and φ are expressed in angular units, for example radians). It is useful to note, in this regard, that the size of the elementary cells may also be defined in relative, rather than absolute, values, thus indicating the total number of elementary cells for each of the three directions with respect to the volume (or 'design space') they will occupy. It is also possible that such mapping is also irregular in shape, in which case several points of origin may coexist within the same volume, characterizing different parts of the same three-dimensional lattice structure, and consequently creating three-dimensional lattice structures that conform to the volume they occupy.

For example, in the embodiment of Figures 1 to 5 the three-dimensional lattice structure of the damping device 10 has a volume occupancy rate of 25% and a number of elementary cells equal to 6 (relative to the total volume of the damping device) in each of the three directions r, θ and φ of a spherical mapping, as described above, with the origin in the centre of mass of the damping device.

Alternatively, however, as mentioned, the three-dimensional lattice structure may have variable constitutive parameters in the different directions of the reference system in order to achieve specific mechanical responses along these directions.

As shown in Figure 5, the damping device 10 is advantageously configured so that in the mounted condition on the string plate P, the protruding portions 14 and 16 are not in contact with the string plate P, with the possible exception of the two longitudinal strings S1 which are in contact with the central portion 12, and can therefore move with respect to the string plate P along at least one spatial direction, namely at least in a direction perpendicular to the plane of the string plate itself.

Figure 6 shows a vibration damping device 110 obtained by joining several damping devices 10 of the type shown in Figures 1 to 5. In this case, there is provided, for each pair of adjacent damping devices 10, a connecting portion 22, formed for example by a simple strip of material, which connects the outer portion 14 of one damping device 10 with the outer portion 14 of the other damping device 10 or, alternatively, the outer portion 16 of one damping device 10 with the outer portion 16 of the other damping device 10. In this way, a vibration damping device is obtained which is capable of contacting four, five or more strings at the same time and which therefore has an increased vibration damping capacity.

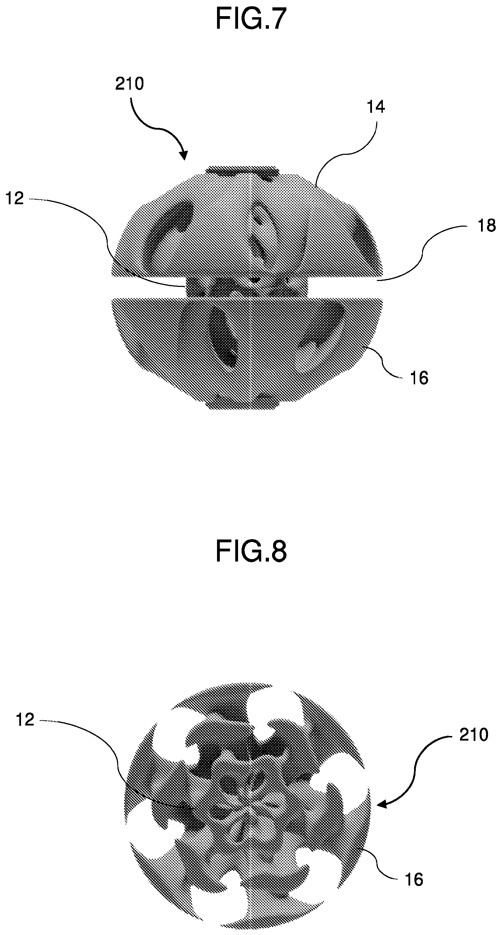

Figures 7 and 8 show a further embodiment of the damping device, indicated 210, which has a configuration identical to that of the damping device 10 of Figures 1 to 5, from which it differs basically only in that the central portion 12 is devoid of a perimeter wall and therefore it is the same lattice structure of the central portion 12 that is in contact with the strings, in the mounted condition of the damping device on the string plate. For the rest, what has already been stated above with reference to Figures 1 to 5 still applies.

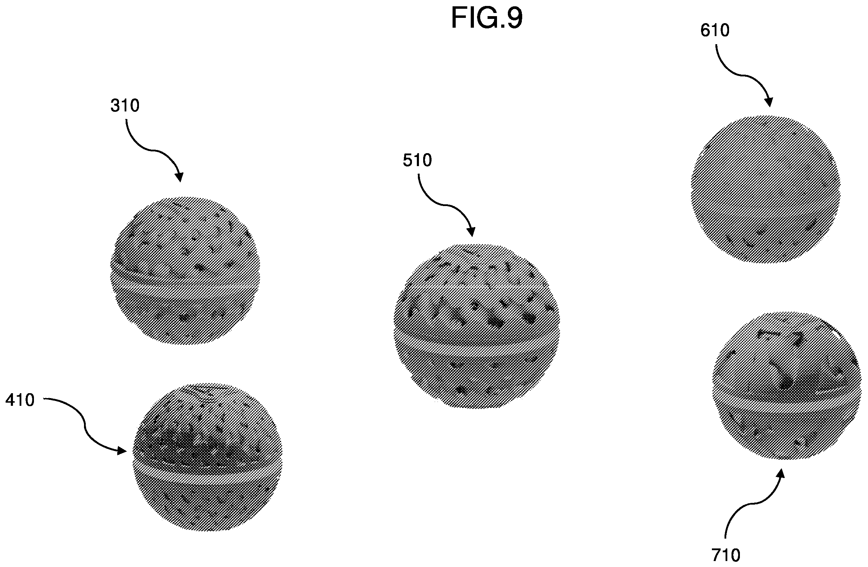

Three-dimensional lattice structures may have different but functionally equivalent configurations. For example, the TPMS structure may be configured as a Lidinoid, Schwartz P, Schwartz D or any other implicit geometry or combination thereof. Some non-limiting embodiments of the damping device are illustrated in Figure 9, where they are indicated 310, 410, 510, 610 and 710, respectively.

Likewise, in further embodiments the two outer portions of the damping device may extend in one or two spatial directions.

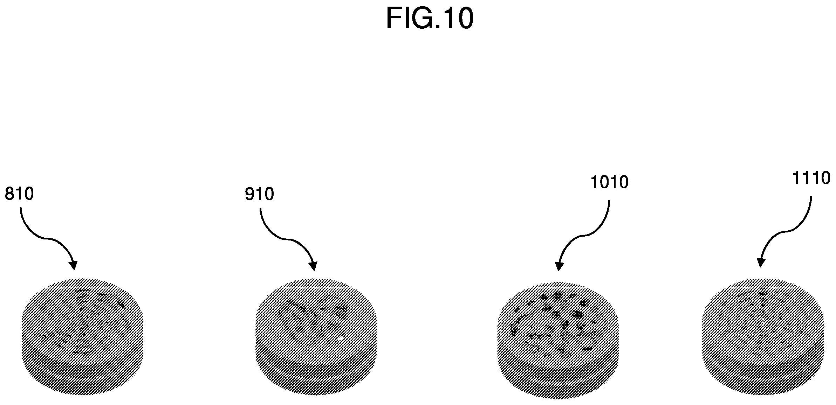

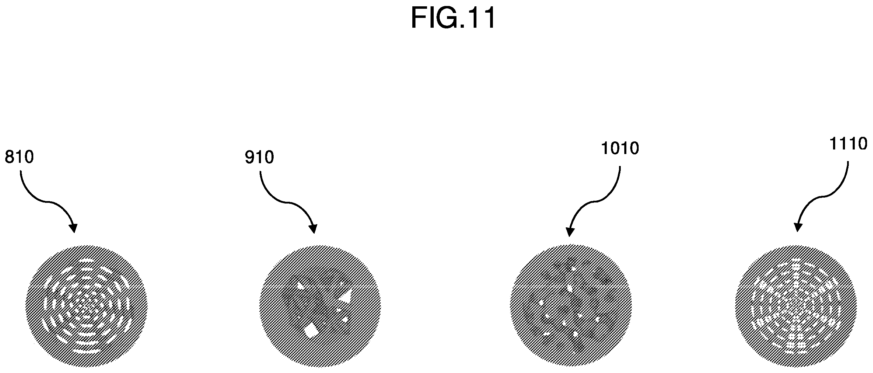

The shape of the damping device may have configurations other than the spherical one shown in Figures 1 to 9. For example, as shown in Figures 10 and 11, where four further embodiments of the damping device are proposed, indicated 810, 910, 1010 and 1110, respectively, the damping device may, for example, have a generally cylindrical shape.

Alternatively, the general shape of the damping device may be that of any other primitive solid (for example, a cube, cone, prism or combinations thereof) or of irregular solids. In summary, the damping device may take any shape, including aesthetically characterizing shapes (for example a company logo, or a letter), without altering the basic principles of the invention.

In a preferred embodiment, the damping device is manufactured from an elastomeric material, in particular from thermoplastic or thermosetting elastomers. In general, the damping device may be made of one or more materials, including viscoelastic materials. However, any type of material may in principle be used, relying on the same basic principle of the invention, to produce a significant vibration reduction effect.

The present invention has been described so far with reference to some of its currently preferred embodiments. It is to be understood that other embodiments may be envisaged, which share the same inventive core with those described herein, as defined by the appended claims.

## Claims

1. Vibration damping device (10) for a sports racket (R) of the type comprising a frame (F) and a string plate (P) carried by the frame (F), the device (10) being made as a single piece comprising:
- a central portion (12) adapted to be inserted between a pair of parallel strings (S1) of the string plate (P) so as to be in contact at least with said pair of parallel strings (S1), and
- a pair of outer portions (14, 16) which protrude from opposite sides of said central portion (12) in such a way that in the mounted condition of the device (10) on the string plate (P) said outer portions (14, 16) are arranged on opposite sides of the string plate (P),
**characterized in that** said central portion (12) and said outer portions (14, 16) are formed as three-dimensional lattice structures comprising a plurality of elementary cells arranged in the three spatial directions, said elementary cells being configured in such a way that at least one of them has at least one degree of freedom with respect to at least another elementary cell in one of the three spatial directions to dissipate during operation, thanks to the elastic response of these elementary cells, at least part of the kinetic energy produced by the vibration of the string plate (P), and of the racket (R) as a whole.

2. Device according to claim 1, wherein said three-dimensional lattice structures have density, number of elementary cells and/or shape of the elementary cells which are constant or variable in one or more of the three spatial directions.

3. Device according to any one of the preceding claims, wherein said outer portions (14, 16) have a symmetrical configuration with respect to a middle plane of the device (10) which is oriented, in the mounted condition of the device (10) on the string plate (P), parallel to the string plate (P).

4. Device according to any one of the preceding claims, wherein each of said outer portions (14, 16) has a hemispherical shape, in particular with a radius between 5 mm and 20 mm.

5. Device according to any one of the preceding claims, wherein said central portion (12) further comprises a perimeter wall (20) having, in plan view, a profile with a square, rectangular, circular, elliptical or other shape, which profile is configured in such a way as to ensure the contact of said perimeter wall (20) with said at least one pair of parallel strings (S1) of the string plate (P).

6. Device according to any one of the preceding claims, wherein said central portion (12) and said outer portions (14, 16) are arranged and configured in such a way that, in the mounted condition of the device (10) on the string plate (P), the outer portions (14, 16) are not in contact with the string plate (P) and are thus able to move with respect to the string plate (P) along at least one spatial direction.

7. Device according to any one of the preceding claims, wherein said three-dimensional lattice structures occupy between 15% and 90% of the total volume of the device (10).

8. Device according to any one of the preceding claims, wherein said three-dimensional lattice structures are made of elastomeric material, particularly thermoplastic elastomer or thermosetting elastomer, or of viscoelastic material.

9. Device according to any one of claims 1 to 7, wherein said three-dimensional lattice structures are made of more than one material, including at least an elastomeric material or a viscoelastic material.

10. Device according to any one of the preceding claims, wherein said three-dimensional lattice structures are made by 3D printing or additive manufacturing process, in particular by photo-polymerization process, more in particular by stereolithography or DLP (Digital Light Processing) technology, or by selective laser melting process.

11. Assembly comprising a plurality of devices (10) according to any one of the preceding claims and, for each pair of adjacent devices (10), a connecting portion (22) connecting an outer portion (14, 16) of one device (10) of said pair to a corresponding outer portion (14, 16) of the other device (10) of said pair.

## Patentansprüche

1. Schwingungsdämpfungsvorrichtung (10) für einen Sportschläger (R) der Art, umfassend einen Rahmen (F) und eine Saitenplatte (P), die durch den Rahmen (F) getragen wird, wobei die Vorrichtung (10) als ein Einzelstück hergestellt ist, umfassend:
- einen zentralen Abschnitt (12), der angepasst ist, um zwischen ein Paar von parallelen Saiten (S1) der Saitenplatte (P) eingeführt zu werden, um mindestens mit dem Paar von parallelen Saiten (S1) in Berührung zu sein, und
- ein Paar von äußeren Abschnitten (14, 16), die von gegenüberliegenden Seiten des zentralen Abschnitts (12) auf eine derartige Weise vorstehen, dass in dem montierten Zustand der Vorrichtung (10) an der Saitenplatte (P) die äußeren Abschnitte (14, 16) an gegenüberliegenden Seiten der Saitenplatte (P) angeordnet sind,
**dadurch gekennzeichnet, dass** der zentrale Abschnitt (12) und die äußeren Abschnitte (14, 16) als dreidimensionale Gitterstrukturen ausgebildet sind, umfassend eine Vielzahl von Elementarzellen, die in den drei Raumrichtungen angeordnet sind, wobei die Elementarzellen auf eine derartige Weise konfiguriert sind, dass mindestens eine von ihnen mindestens einen Freiheitsgrad in Bezug auf mindestens eine andere Elementarzelle in einer der drei Raumrichtungen aufweist, um während eines Betriebs, dank der elastischen Antwort dieser Elementarzellen, mindestens einen Teil der kinetischen Energie zu dissipieren, die durch die Schwingung der Saitenplatte (P) und des Schlägers (R) als Ganzes erzeugt wird.

2. Vorrichtung nach Anspruch 1, wobei die dreidimensionalen Gitterstrukturen eine Dichte, eine Anzahl von Elementarzellen und/oder eine Form der Elementarzellen aufweisen, die in einer oder mehreren der drei Raumrichtungen konstant oder variabel sind.

3. Vorrichtung nach einem der vorstehenden Ansprüche, wobei die äußeren Abschnitte (14, 16) eine symmetrische Konfiguration in Bezug auf eine Mittelebene der Vorrichtung (10) aufweisen, die, in dem montierten Zustand der Vorrichtung (10) an der Saitenplatte (P), parallel zu der Saitenplatte (P) orientiert ist.

4. Vorrichtung nach einem der vorstehenden Ansprüche, wobei jeder der äußeren Abschnitte (14, 16) eine halbkugelförmige Form aufweist, insbesondere mit einem Radius zwischen 5 mm und 20 mm.

5. Vorrichtung nach einem der vorstehenden Ansprüche, wobei der zentrale Abschnitt (12) ferner eine Umfangswand (20) umfasst, die, in einer Draufsicht, ein Profil mit einer quadratischen, rechteckigen, kreisförmigen, elliptischen oder anderen Form aufweist, wobei das Profil auf eine derartige Weise konfiguriert ist, um die Berührung der Umfangswand (20) mit dem mindestens einen Paar von parallelen Saiten (S1) der Saitenplatte (P) zu gewährleisten.

6. Vorrichtung nach einem der vorstehenden Ansprüche, wobei der zentrale Abschnitt (12) und die äußeren Abschnitte (14, 16) auf eine derartige Weise angeordnet und konfiguriert sind, dass, in dem montierten Zustand der Vorrichtung (10) an der Saitenplatte (P), die äußeren Abschnitte (14, 16) nicht in Berührung mit der Saitenplatte (P) sind und somit in der Lage sind, sich in Bezug auf die Saitenplatte (P) entlang mindestens einer Raumrichtung zu bewegen.

7. Vorrichtung nach einem der vorstehenden Ansprüche, wobei die dreidimensionalen Gitterstrukturen zwischen 15 % und 90 % des Gesamtvolumens der Vorrichtung (10) einnehmen.

8. Vorrichtung nach einem der vorstehenden Ansprüche, wobei die dreidimensionalen Gitterstrukturen aus einem elastomeren Material, insbesondere einem thermoplastischen Elastomer oder einem aushärtbaren Elastomer oder aus einem viskoelastischen Material hergestellt sind.

9. Vorrichtung nach einem der Ansprüche 1 bis 7, wobei die dreidimensionalen Gitterstrukturen aus mehr als einem Material hergestellt sind, das mindestens ein elastomeres Material oder ein viskoelastisches Material einschließt.

10. Vorrichtung nach einem der vorstehenden Ansprüche, wobei die dreidimensionalen Gitterstrukturen durch ein 3D-Drucken oder ein additives Fertigungsverfahren, insbesondere durch ein Photopolymerisationsverfahren, mehr insbesondere durch eine Stereolithographie oder eine DLP-Technologie (Digital-Light-Processing-Technologie) oder durch ein selektives Laserschmelzverfahren hergestellt sind.

11. Baugruppe, umfassend eine Vielzahl von Vorrichtungen (10) nach einem der vorstehenden Ansprüche und, für jedes Paar von benachbarten Vorrichtungen (10), einen Verbindungsabschnitt (22), der einen äußeren Abschnitt (14, 16) einer Vorrichtung (10) des Paares mit einem entsprechenden äußeren Abschnitt (14, 16) der anderen Vorrichtung (10) des Paares verbindet.

## Revendications

1. Dispositif amortisseur de vibrations (10) pour une raquette de sport (R) du type comprenant un cadre (F) et une plaque à cordes (P) portée par le cadre (F), le dispositif (10) étant fabriqué en une seule pièce comprenant :
- une partie centrale (12) adaptée pour être insérée entre une paire de cordes parallèles (S1) de la plaque à cordes (P) afin d'être en contact au moins avec ladite paire de cordes parallèles (S1), et
- une paire de parties externes (14, 16) qui font saillie de côtés opposés de ladite partie centrale (12) de telle sorte que, dans l'état monté du dispositif (10) sur la plaque à cordes (P), lesdites parties externes (14, 16) soient disposées sur des côtés opposés de la plaque à cordes (P),
**caractérisé en ce que** ladite partie centrale (12) et lesdites parties externes (14, 16) sont formées en tant que structures en treillis tridimensionnelles comprenant une pluralité de cellules élémentaires disposées dans les trois directions spatiales, lesdites cellules élémentaires étant conçues de telle sorte qu'au moins l'une d'entre elles ait au moins un degré de liberté par rapport à au moins une autre cellule élémentaire dans l'une des trois directions spatiales pour dissiper pendant le fonctionnement, grâce à la réponse élastique de ces cellules élémentaires, au moins une partie de l'énergie cinétique produite par la vibration de la plaque à cordes (P), et de la raquette (R) dans son ensemble.

2. Dispositif selon la revendication 1, dans lequel lesdites structures en treillis tridimensionnelles ont une densité, un nombre de cellules élémentaires et/ou une forme des cellules élémentaires qui sont constants ou variables dans l'une ou plusieurs des trois directions spatiales.

3. Dispositif selon l'une quelconque des revendications précédentes, dans lequel lesdites parties externes (14, 16) ont une configuration symétrique par rapport à un plan médian du dispositif (10) qui est orienté, dans l'état monté du dispositif (10) sur la plaque à cordes (P), parallèlement à la plaque à cordes (P).

4. Dispositif selon l'une quelconque des revendications précédentes, dans lequel chacune desdites parties externes (14, 16) a une forme hémisphérique, en particulier avec un rayon compris entre 5 mm et 20 mm.

5. Dispositif selon l'une quelconque des revendications précédentes, dans lequel ladite partie centrale (12) comprend en outre une paroi périphérique (20) ayant, dans une vue en plan, un profil de forme carrée, rectangulaire, circulaire, elliptique ou autre, lequel profil est conçu de manière à assurer le contact de ladite paroi périphérique (20) avec ladite au moins une paire de cordes parallèles (S1) de la plaque à cordes (P).

6. Dispositif selon l'une quelconque des revendications précédentes, dans lequel ladite partie centrale (12) et lesdites parties externes (14, 16) sont disposées et conçues de telle sorte que, dans l'état monté du dispositif (10) sur la plaque à cordes (P), les parties externes (14, 16) ne soient pas en contact avec la plaque à cordes (P) et soient donc capables de se déplacer par rapport à la plaque à cordes (P) le long d'au moins une direction spatiale.

7. Dispositif selon l'une quelconque des revendications précédentes, dans lequel lesdites structures en treillis tridimensionnelles occupent entre 15 % et 90 % du volume total du dispositif (10).

8. Dispositif selon l'une quelconque des revendications précédentes, dans lequel lesdites structures en treillis tridimensionnelles sont faites d'un matériau élastomère, en particulier d'un élastomère thermoplastique ou d'un élastomère thermodurcissable, ou d'un matériau viscoélastique.

9. Dispositif selon l'une quelconque des revendications 1 à 7, dans lequel lesdites structures en treillis tridimensionnelles sont faites de plus d'un matériau, comportant au moins un matériau élastomère ou un matériau viscoélastique.

10. Dispositif selon l'une quelconque des revendications précédentes, dans lequel lesdites structures en treillis tridimensionnelles sont faites par impression 3D ou par procédé de fabrication additive, en particulier par procédé de photopolymérisation, plus particulièrement par technologie de stéréolithographie ou de DLP (Traitement numérique de la lumière), ou par procédé de fusion sélective au laser.

11. Ensemble comprenant une pluralité de dispositifs (10) selon l'une quelconque des revendications précédentes et, pour chaque paire de dispositifs (10) adjacents, une partie de liaison (22) qui relie une partie externe (14, 16) d'un dispositif (10) de ladite paire à une partie externe (14, 16) correspondante de l'autre dispositif (10) de ladite paire.
